# FASCICULE DE BREVET EUROPEEN

(11) **EP 1 700 073 B1**
(45) Date de publication et mention de la délivrance du brevet: **29.04.2009**
(21) Numéro de dépôt: 04816593.0
(22) Date de dépôt: 22.12.2004
(51) Int. Cl.: F16D 65/14, F16D 51/00

(54) **FREIN DE VEHICULE AUTOMOBILE ET PROCEDE DE MONTAGE D'UN TEL FREIN**
KRAFTFAHRZEUGBREMSE UND VERFAHREN ZUR MONTAGE EINER SOLCHEN BREMSE
MOTOR VEHICLE BRAKE AND METHOD OF MOUNTING ONE SUCH BRAKE

(30) Priorité: 24.12.2003 FR 0315348
(43) Date de publication de la demande: 13.09.2006
(73) Titulaire: Peugeot Citroën Automobiles, 78140 Vélizy-Villacoublay (FR)
(72) Inventeur: LABROUE, Stéphane, F-95110 SANNOIS (FR)
(86) Numéro de dépôt international: PCT/FR2004/050746
(87) Numéro de publication internationale: WO 2005/064253

(56) Documents cités:
- DE-A- 2 949 506
- US-A- 4 076 105
- PATENT ABSTRACTS OF JAPAN vol. 1999, no. 11, 30 September 1999 (1999-09-30) -& JP 11 153160 A (NISSHINBO), 8 June 1999 (1999-06-08)

## Description

L'invention se rapporte à un frein, notamment pour véhicule automobile.

L'invention concerne plus particulièrement un frein comprenant : un support, au moins une mâchoire de frein, mobile sur le support, destinée à coopérer avec une surface de friction, un mécanisme de transmission destiné à déplacer la ou les mâchoires de frein, le mécanisme de transmission comportant au moins une pièce d'actionnement mobile entre une position de référence dans laquelle le frein n'est pas serré et une position de travail maximale dans laquelle le frein est serré au maximum, un câble gainé destiné à être fixé à l'une de ses extrémités à un dispositif de commande et dont l'autre extrémité est reliée à la pièce d'actionnement, la gaine du câble ayant une longueur originelle qui diminue lors des premières utilisations du câble, pour atteindre une longueur définitive.

On connaît déjà dans l'état de la technique de tels dispositifs, tels que des freins à tambour. Les freins à tambour comportent, en général, notamment une pièce d'actionnement, tel qu'un levier de frein, servant à commander les mâchoires du frein. Ce levier de frein est relié par un câble gainé à un dispositif de commande, telle qu'une commande de frein à main située dans l'habitacle du véhicule. La gaine servant à protéger le câble est composée de spirales métalliques enroulées et maintenues dans un matériau de type caoutchouteux.

La longueur du câble gainé du frein à tambour nécessite généralement un réglage long et fastidieux lors de son montage en usine. Ainsi dans une première étape, le câble gainé est disposé selon un emplacement précis de façon à relier le levier de frein à la commande de frein à main. Une deuxième étape consiste à mettre le câble en tension, de façon à ajuster la longueur du câble.

Ensuite, la commande de frein à main est actionnée au moins une dizaine de fois, de façon à tasser les spirales métalliques de la gaine. Ces actions ont pour conséquence de raccourcir la longueur de la gaine et ainsi de libérer du câble.

Une nouvelle étape d'ajustement de la tension du câble est alors nécessaire par un opérateur.

Toutes ces opérations, longues et contraignantes, doivent être renouvelées dès que le câble doit être changé au cours de la vie du véhicule.

Un but de la présente invention est de pallier tout ou partie des inconvénients de l'art antérieur relevés ci-dessus.

A cette fin, le frein selon l'invention, par ailleurs conforme à la définition générique qu'en donne le préambule ci-dessus, est essentiellement caractérisé en ce qu' il comporte au moins un moyen de retenu provisoire apte à coopérer temporairement avec la pièce d'actionnement lors du montage du frein, de façon à maintenir la pièce d'actionnement dans une position stable et décalée située entre sa position de référence et sa position de travail maximale, et en ce que le moyen de retenu ne coopère pas avec la pièce d'actionnement lorsque la gaine a sa dimension définitive et que le frein est en configuration de fonctionnement.

Par ailleurs, l'invention peut comporter l'une ou plusieurs des caractéristiques suivantes :
- la différence entre la position stable décalée et la position de référence est déterminée de façon à compenser au moins partiellement, et de préférence entièrement, la variation de longueur de la gaine du câble entre ses dimensions originelles et définitives,
- le moyen de retenu provisoire est solide, et fusible et/ou amovible et/ou élastique,
- le moyen de retenu provisoire est constitué d'un axe formant butée, l'axe étant disposé entre la position de référence et la position de travail maximale de la pièce d'actionnement,
- l'axe comporte à l'une de ses extrémités un organe de préhension,
- le support possède une première face destinée à accueillir la ou les mâchoires de frein et le mécanisme de transmission, et l'organe de préhension fait saillie sur une face du support opposée à la première face.
- le moyen de retenu provisoire est constitué d'un doigt mobile entre une première position maintenant la pièce d'actionnement dans la position décalée par calage, et une deuxième position dans laquelle il ne coopère pas avec la pièce d'actionnement,
- le doigt est mobile en rotation,
- lorsque le frein est en position montée sur un véhicule, le doigt est sollicité vers la deuxième position par gravité,
- lorsque le frein est en position montée sur un véhicule, le doigt est sollicité vers la deuxième position par un moyen de rappel qui coopère avec le doigt mobile,
- le moyen d'actionnement coopère avec le doigt mobile de façon à ce que le déplacement du moyen d'actionnement libère le doigt mobile.
- le moyen de retenu provisoire est fixé sur la mâchoire située à proximité de la pièce d'actionnement,
- le frein comporte deux mâchoires,
- la pièce d'actionnement est un levier pivotant,
- le dispositif de commande est un organe de commande d'un frein secondaire,
- le frein est un frein à tambour.

Ainsi, l'invention concerne un véhicule automobile comportant un frein conforme aux caractéristiques précédentes.

Un autre but de l'invention est de proposer un procédé de montage d'un frein de véhicule automobile comportant un tel frein. A cet effet, le procédé de montage d'un frein de véhicule automobile concerne un frein, qui comprend un support, au moins une mâchoire de frein, mobile sur le support, destinée à coopérer avec une surface de friction, un mécanisme de transmission destiné à déplacer la ou les mâchoires de frein, le mécanisme de transmission comportant au moins une pièce d'actionnement mobile entre une position de référence dans laquelle le frein n'est pas serré et une position de travail maximale dans laquelle le frein est serré au maximum, un câble gainé destiné à être fixé à l'une de ses extrémités à un dispositif de commande et dont l'autre extrémité est reliée à la pièce d'actionnement, le procédé de montage comporte une étape d'accrochage du câble sur le dispositif de commande et sur la pièce d'actionnement, une étape de mise en tension du câble, au moins une étape de tassement de la gaine du câble, une étape d'ajustement de la tension du câble. Le procédé de montage est essentiellement caractérisé en ce que l'étape d'ajustement de la tension du câble comporte un positionnement contraint et provisoire de la pièce d'actionnement dans une position stable et décalée, située entre sa position de référence et la position de travail maximale, et en ce que l'étape d'ajustement précède l'étape de mise en tension du câble.

Par ailleurs l'invention peut comporter l'une ou plusieurs des caractéristiques suivantes :
- l'étape d'ajustement de la tension du câble consiste à positionner la pièce d'actionnement à une distance comprise entre 3 et 15 mm de sa position de référence,
- l'étape d'ajustement de la tension du câble consiste à positionner la pièce d'actionnement à une distance comprise entre 10 et 30 % de la distance qui sépare la position de référence de la position de travail maximale,
- l'étape d'ajustement de la tension du câble consiste à contraindre la pièce d'actionnement, dans une position provisoire décalée, par la pose d'un moyen de retenu provisoire coopérant avec la pièce d'actionnement, le moyen de retenu étant solide et/ou fusible et/ou amovible et/ou élastique,
- l'étape de mise en tension du câble est suivie d'une étape de suppression ou de diminution de la contrainte imposée à la pièce d'actionnement,
- l'étape de suppression consiste en un retrait manuel du moyen de retenu provisoire,
- l'étape de suppression consiste en un escamotage automatique du moyen de retenu provisoire par coopération de ce dernier avec la pièce d'actionnement lors d'au moins une étape de tassement de la gaine ou lors d'un serrage du frein,
- l'étape de suppression consiste en une rupture du moyen de retenu provisoire par coopération avec la pièce d'actionnement lors d'au moins une étape de tassement de la gaine ou lors d'un serrage du frein,
- le procédé de montage comporte une étape de repositionnement automatique de la pièce d'actionnement, au moins au voisinage de sa position de référence, postérieure à l'étape de suppression ou de diminution de la contrainte, le repositionnement est réalisé par un actionnement de la pièce d'actionnement lors d'une étape de tassement de la gaine ou lors d'un serrage du frein,
- l'étape de tassement de la gaine est réalisée par au moins un serrage du frein.

D'autres particularités et avantages apparaîtront à la lecture de la description ci-après faite en référence aux figures dans lesquelles :
- la figure 1 représente une vue de face d'un frein à tambour comportant un moyen de retenu conforme à un premier mode de réalisation de l'invention,
- la figure 2 représente une vue de face d'un détail de la figure 1, illustrant différentes positions de l'embout de câble,
- la figure 3 représente une vue en coupe selon l'axe AA de la figure 1,
- la figure 4 représente une vue de face d'un frein à tambour comportant un moyen de retenu conforme à un deuxième mode de réalisation de l'invention,
- la figure 5 représente une vue de face d'un détail de la figure 4, illustrant différentes positions de l'embout de câble ainsi que différentes positions du moyen de retenu,
- la figure 6 représente une vue en coupe selon l'axe BB de la figure 5.

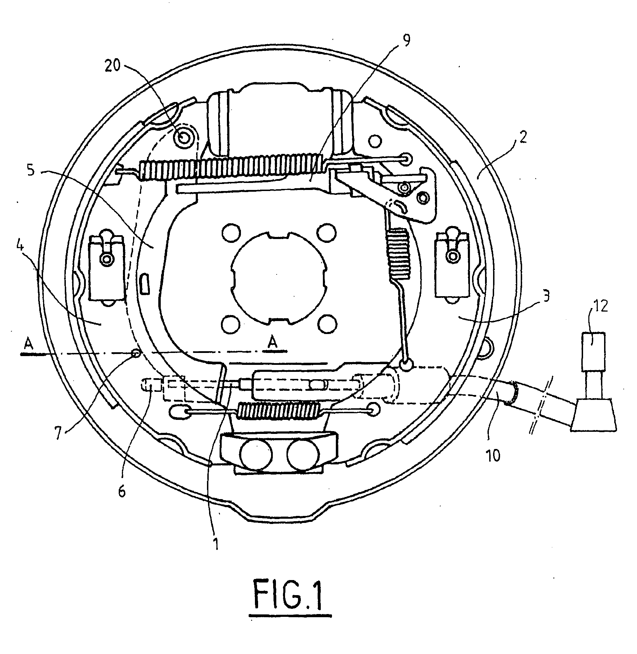

La figure 1 représente un frein à tambour pour véhicule automobile de structure classique comportant notamment : deux mâchoires 3, 4 de frein mobiles montées sur l'une des faces d'un plateau 2 de frein. Les parties latérales des mâchoires 3, 4 de frein sont destinées à coopérer avec une surface de friction d'un tambour (non représentée) afin de permettre le ralentissement ou l'arrêt du véhicule. Lorsque le frein est monté sur le véhicule, la face 19 libre du plateau 2 de frein, placée à l'opposé du tambour, est tournée vers l'intérieur du véhicule.

Les mâchoires 3, 4 de frein sont notamment commandées par un levier 5 de frein. Le levier 5 de frein est monté de façon pivotante de telle manière que l'une de ses extrémités coopère avec l'extrémité d'une des mâchoires 4 de frein par l'intermédiaire d'un axe 20, cette mâchoire 4 est aussi nommée « segment tendu ». En position de repos, le levier 5 de frein est disposé entre le segment 4 tendu et le plateau 2 de frein, presque la totalité du levier 5 de frein se trouve ainsi derrière le segment 4 tendu.

Le frein à tambour comprend de plus une entretoise 9 disposée entre les extrémités des mâchoires 3, 4 de frein, l'une des extrémités de l'entretoise 9 est située au voisinage de l'axe 20, reliant le levier 5 de frein au segment 4 tendu. De façon classique (non détaillée ici), l'entretoise 9 commande le déplacement des mâchoires 3, 4 suite à un déplacement du levier 5 de frein. De façon classique, l'entretoise 9 dispose d'un système de réglage automatique composé d'une vis coopérant avec un écrou (non représenté) permettant de maintenir constantes les dimensions du frein à tambour. Ainsi malgré l'usure des parties latérales des mâchoires 3, 4 de frein, les mâchoires 3, 4 de frein, disposées de façon à décrire un cercle, possèdent toujours le même diamètre.

Les mâchoires 3, 4 de frein peuvent se déplacer entre une position de repos, correspondant à une position de repos du levier 5 de frein, pour laquelle aucun freinage n'est appliqué au tambour et une position de travail maximale, correspondant à un déplacement maximal du levier 5 de frein, pour laquelle le frein est serré au maximum.

Le déplacement du levier 5 de frein est commandé par une commande 12 de frein à main située classiquement dans l'habitacle du véhicule. L'extrémité libre du levier 5 de frein est relié à la commande 12 de frein à main par un câble 1 passant sous la structure du véhicule selon un emplacement défini. Le câble 1 est protégé par une gaine 10 formée de spirales métalliques enroulées et maintenues dans un matériau de type caoutchouteux ; le câble peut mesurer entre 1,5 et 3,5 m selon le type de véhicule.

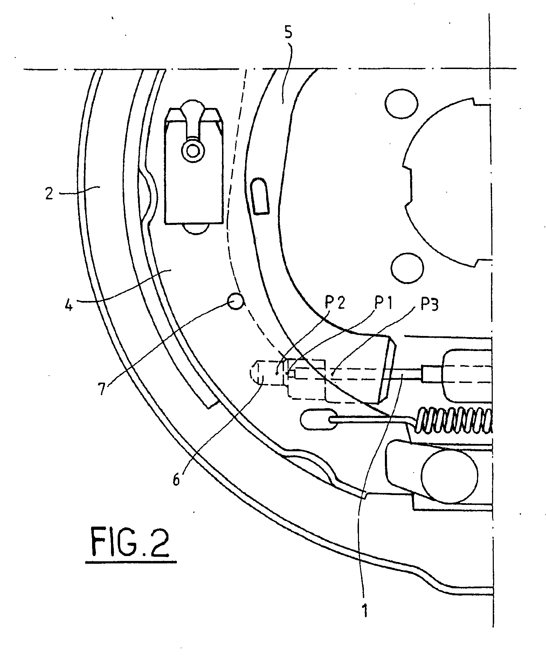

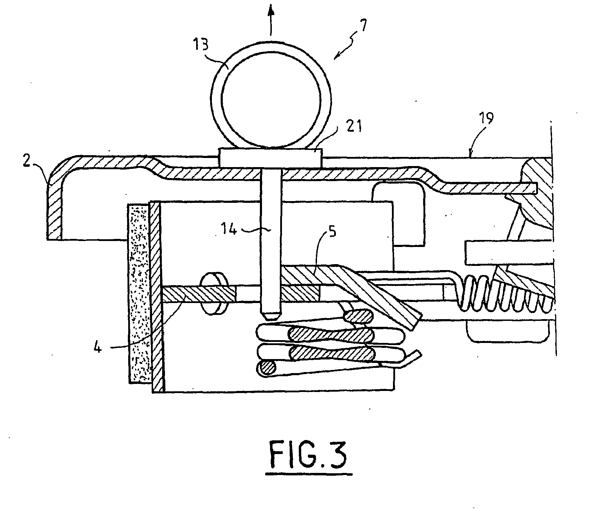

Tel que le montre la figure 3, le plateau 2 de frein et le segment 4 tendu sont percés de façon à ce que leurs trous respectifs puissent être placés en vis à vis lorsque le frein à tambour est assemblé. Ces trous sont destinés à accueillir un moyen 7 de retenu permettant de maintenir le levier 5 de frein dans une position provisoire et décalée comprise entre sa position de repos et sa position de travail maximale, ces différentes positions correspondent alors respectivement aux positions P1, P2 et P3 de l'embout 6 de câble (cf figure 2). Le moyen 7 de retenu est placé de façon préférentielle dans la partie inférieure du frein à tambour située à l'opposée de l'entretoise 9 ; mais tout autre emplacement permettant de maintenir déplacé le levier 5 de frein de façon satisfaisante peut être envisagé. Le levier 5 de frein ainsi déplacé, se trouve à une distance comprise entre 3 et 15 mm de sa position de repos ; ce qui correspond à une distance comprise entre 10 et 30 % de la distance séparant sa position de repos de sa position de travail maximale.

Le dispositif vis-écrou compris dans l'entretoise 9 est réglé afin de compenser le déplacement des mâchoires 3, 4 de frein dû à la position du levier 5 de frein différente de sa position de repos. Ainsi les mâchoires 3, 4 de frein décrivent un cercle dont le diamètre extérieur est équivalent à celui décrit par ses mêmes mâchoires 3, 4 lorsque le levier 5 de frein est au repos.

Le moyen 7 de retenu se compose d'une tige 14 et d'un organe 13 de préhension placé dans son prolongement, ce dernier faisant saillie sur la face 19 libre du plateau 2 de frein. Une butée 21 peut être installée entre la tige 14 et l'organe 13 de préhension.

La tige 14 mesure entre 1 et 10 cm, et de préférence entre 3 et 5 cm, elle possède un diamètre compris entre 1 et 10 mm, et de préférence entre 4 et 6 mm. La tige 14 est placée de façon sensiblement perpendiculaire au plan du plateau 2 de frein. Elle contraint le levier 5 de frein déplacé en empêchant son retour vers sa position de repos. Le levier 5 de frein est ainsi en appui de façon stable sur la tige 14, formant une butée.

L'organe 13 de préhension peut notamment se constituer d'un anneau 13 possédant un diamètre intérieur suffisant pour permettre le passage d'un doigt d'un opérateur de montage. Toutefois, différentes formes de l'organe 13 de préhension peuvent être envisagées.

La suite de la description décrit plus particulièrement le montage du frein à tambour sur le véhicule et ses premiers actionnements.

Le frein à tambour tel que décrit est alors installé sur un véhicule, puis le câble 1 gainé est à son tour installé et mis sous tension par un opérateur, de façon à ce qu'une action sur la commande 12 de frein à main entraîne un déplacement du levier 5 de frein. L'embout 6 du câble 1 se trouve alors dans une position P1, tel que le montre la figure 2.

L'opérateur enlève alors le moyen 7 de retenu : l'embout 6 du câble 1 reste dans sa position P1 décalée par rapport à sa position de repos P2 car le levier 5 de frein est maintenu décalé par le câble 1 sous tension. La distance comprise entre P1 et P2 est comprise entre 3 et 15 mm, et de préférence entre 5 et 10 mm. Cette distance représente un pourcentage compris entre 10 à 40 %, et de préférence entre 20 et 30 % de la distance comprise entre le point P1 et le P3, P3 correspondant à l'emplacement atteint par l'embout 6 de câble 1 lors d'un actionnement maximal de la commande 12 de frein à main. Le frein à tambour peut dès lors être utilisé comme système de freinage.

Dès les premiers actionnements de réglage de la commande 12 de frein à main, la gaine 10 entourant le câble 1, reliant le levier 5 de frein à la commande 12 de frein à main est sollicitée : la gaine 10 se tasse. Ainsi les espacements entre ses spirales métalliques se réduisent, ce qui entraîne le raccourcissement de la gaine 10. La longueur du câble 1 présent dans la gaine 10 est alors diminuée, ce qui entraîne un surplus du câble 1 autorisant ainsi le déplacement de l'embout 6 de câble 1 de la position P1 vers sa position de repos P2. Le levier 5 de frein se décale alors lui aussi vers sa position de repos.

Après, par exemple, 10 à 15 actionnements complets de la commande 12 de frein à main, la gaine atteint sa dimension définitive et l'embout 6 de câble 1 se trouve alors au voisinage de la position de repos P2.

Dès que le moyen 7 de retenu est enlevé du frein à tambour, les premiers actionnements peuvent être réalisés par un opérateur en usine ou par le premier utilisateur du véhicule. Après quelques actionnements de la commande 12 de frein à main, le levier 5 de frein se positionne au voisinage de sa position de repos ; le frein à tambour est alors parfaitement réglé.

Le moyen 7 de retenu peut être livré directement monté sur le frein à tambour ; mais il peut aussi être placé par un opérateur sur le frein à tambour avant ou après le montage de ce dernier sur le véhicule. Toutefois, le moyen 7 de retenu doit être placé avant la mise sous tension du câble 1.

Si au cours de la vie du véhicule, le câble 1 reliant le levier 5 de frein à la commande 12 de frein à main est changé, un moyen 7 de retenu peut être replacé afin contraindre à nouveau le levier 5 de frein. La mise à longueur du câble 1 et les premiers actionnements du frein se déroulent alors tels que décrits précédemment.

Ainsi un frein à tambour selon l'invention simplifie le réglage de la longueur du câble 1 reliant le levier 5 de frein à la commande 12 de frein à main, aucune remise en tension du câble 1 n'est nécessaire suite aux premiers actionnements de la commande 12 de frein à main. Ce qui simplifie nettement le montage et le réglage de ce câble 1. De plus, les étapes qui visent à tasser la gaine peuvent notamment être réalisées en dehors des chaînes de montage du véhicule.

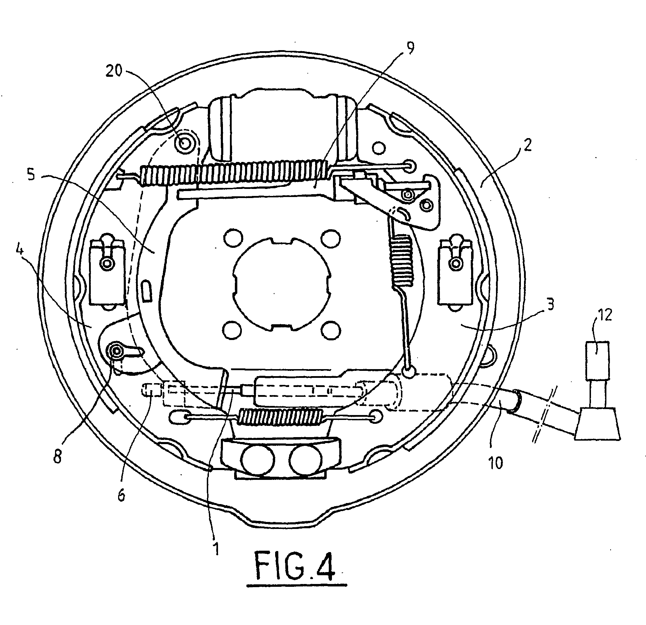

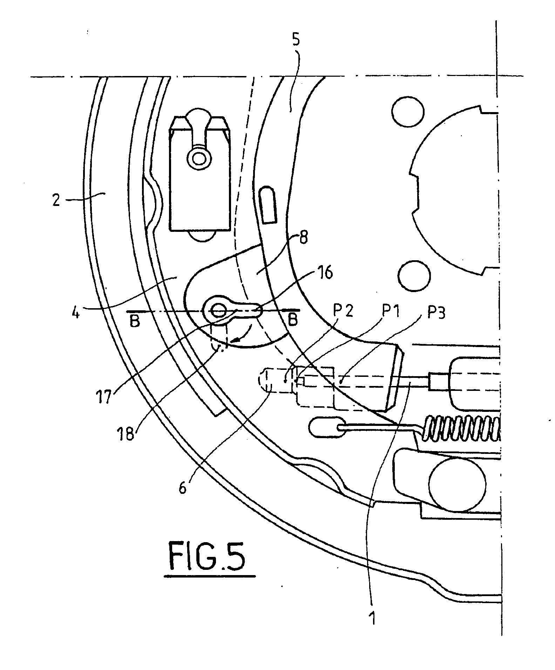

D'autres modes de maintien du levier 5 de frein décalé peuvent être envisagés. Ainsi, les figures 4 à 6 présentent un autre mode de réalisation de l'invention réalisé grâce à un autre moyen 8 de retenu. Les éléments identiques à ceux décrits ci-dessus sont désignés par les mêmes références numériques et ne sont pas décrits une seconde fois.

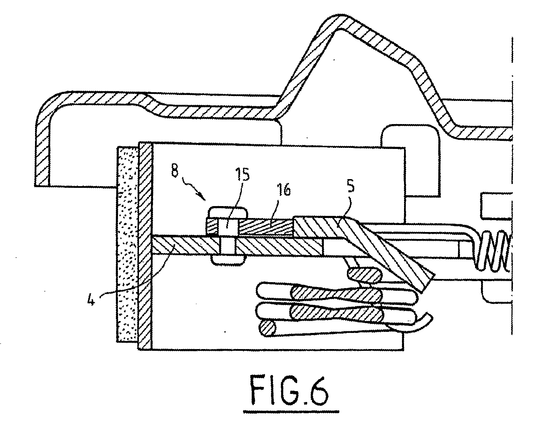

La figure 6 montre en détail ce second moyen 8 de retenu constitué d'un doigt mobile 16, entre deux positions 17, 18, monté de façon pivotante sur le segment 4 tendu par l'intermédiaire d'un axe 15. Le doigt 16 mobile est de forme oblongue, l'axe 15 permettant son pivotement est fixé à l'une de ses extrémités.

Selon ce second mode de réalisation, le frein à tambour est livré avec un levier 5 de frein précontraint par le doigt 16 mobile placé de façon sensiblement parallèle 17 au câble 1 de commande. Le levier 5 de frein et le doigt mobile 16 sont alors en appui l'un sur l'autre. Le doigt 16 mobile contraint ainsi le levier 5 de frein déplacé, en coupant sa trajectoire de façon à empêcher son retour vers sa position de repos, tel que décrit précédemment pour le premier moyen 7 de retenu. Comme précédemment, l'embout 6 du câble 1 se trouve alors en position P1.

Après l'installation de ce frein à tambour sur le véhicule, le câble 1 gainé est placé, puis mis sous tension ; l'embout 6 de câble 1 se situe dans une position P1 décalée par rapport à la position de repos P2.

Dès le premier actionnement de la commande 12 de frein à main, le levier 5 de frein se décale vers sa position de travail maximale (embout 6 de câble 1 en position P3), le doigt 16 mobile du moyen 8 de retenu se trouve alors libéré et par l'effet de la gravité pivote vers la seconde position 18 du doigt mobile. La suppression de la contrainte sur le levier 5 de frein consiste ainsi en un escamotage automatique du moyen 8 de retenu.

La seconde position 18 du doigt mobile 16 est située de façon sensiblement perpendiculaire à la première position 17. Dans cette position 18, le doigt mobile 16 n'est plus sur le trajet du levier 5 de frein et ne retient plus le levier 5 de frein qui est alors libre de revenir au voisinage de sa position de repos. Le pivotement du doigt 16 mobile vers sa deuxième position peut notamment être assisté par un ressort (non représenté).

Tout comme dans le premier mode de réalisation, les premiers actionnements de la commande 12 de frein à main, qui sollicitent la gaine 10, permettent un repositionnement progressif au voisinage de leur position de repos : de l'embout 6 de câble 1 et du levier 5 de frein.

Selon ce second mode de réalisation, le premier actionnement de la commande 12 de frein permettant de libérer le doigt 16 mobile, peut être effectué par un opérateur ou par le premier utilisateur du véhicule.

Ce second moyen 8 de retenu peut notamment être situé approximativement au même endroit que le premier moyen 7 de retenu décrit plus haut (cf figures 1 à 3).

Ce second mode de réalisation présente l'avantage de s'escamoter automatiquement sans l'intervention d'un opérateur sur une ligne de montage. Si le câble 1 reliant la commande 12 de frein au levier 5 de frein est changé au cours de la vie du véhicule, le doigt 16 mobile du moyen 8 de retenu peut être repositionné afin de contraindre à nouveau le levier 5 de frein.

D'autres moyens de retenu provisoires du levier 5 de frein, autre que des éléments fusibles ou amovibles tels que décrits ci-dessus, peuvent être envisagés comme par exemple des éléments élastiques.

Un autre mode de réalisation telle que la suppression du moyen de retenu par une rupture de ce dernier lors de l'actionnement de la commande 12 de frein à main peut aussi être envisagé.

Une particularité de l'invention est que, lorsque le câble gainé (1) est mis en tension et que la gaine a atteint sa dimension définitive (après les premiers actionnements du câble), la pièce d'actionnement (5) n'est plus contrainte par un moyen de retenu (7, 8) dans une position de repos décalée. En effet, après montage et réglage du frein (câble installé et gaine ayant atteint sa longueur définitive), le moyen de retenu (7, 8) n'intervient plus. Ainsi, lorsque le frein est en configuration de fonctionnement, le moyen de retenu (7, 8) ne coopère plus avec la pièce d'actionnement et le frein peut fonctionner de façon classique.

## Revendications

1. Procédé de montage d'un frein de véhicule automobile, le frein comprenant un support (2), au moins une mâchoire de frein (3, 4), mobile sur le support (2), destinée à coopérer avec une surface de friction, un mécanisme de transmission (5, 9) destiné à déplacer la ou les mâchoires de frein (3, 4), le mécanisme de transmission (5, 9) comportant au moins une pièce d'actionnement (5) mobile entre une position de référence dans laquelle le frein n'est pas serré et une position de travail maximale dans laquelle le frein est serré au maximum, un câble (1) gainé destiné à être fixé à l'une de ses extrémités à un dispositif de commande (12) et dont l'autre extrémité est reliée à la pièce d'actionnement (5), le procédé de montage comportant : une étape d'accrochage du câble (1) sur le dispositif de commande (12) et sur la pièce d'actionnement (5), une étape de mise en tension du câble (1), au moins une étape de tassement de la gaine (10) du câble (1), une étape d'ajustement de la tension du câble (1), **caractérisé en ce que** l'étape d'ajustement de la tension du câble (1) comporte un positionnement contraint et provisoire de la pièce d'actionnement (5) dans une position stable et décalée, située entre sa position de référence et la position de travail maximale, et **en ce que** l'étape d'ajustement précède l'étape de mise en tension du câble (1).

2. Procédé de montage selon la revendication 1, **caractérisé en ce que** l'étape d'ajustement de la tension du câble (1) consiste à positionner la pièce d'actionnement (5) à une distance comprise entre 3 et 15 mm de sa position de référence.

3. Procédé de montage selon la revendication 1 ou 2, **caractérisé en ce que** l'étape d'ajustement de la tension du câble (1) consiste à positionner la pièce d'actionnement (5) à une distance comprise entre 10 et 30 % de la distance séparant la position de référence de la position de travail maximale.

4. Procédé de montage selon l'une quelconque des revendications 1 à 3, **caractérisé en ce que** l'étape d'ajustement de la tension du câble (1) consiste à contraindre la pièce d'actionnement (5), dans une position provisoire décalée, par la pose d'un moyen de retenu (7, 8) provisoire coopérant avec la pièce d'actionnement (5), le moyen de retenu étant solide et/ou fusible et/ou amovible et/ou élastique.

5. Procédé de montage selon l'une quelconque des revendications 1 à 4, **caractérisé en ce que** l'étape de mise en tension du câble (1) est suivie d'une étape de suppression ou de diminution de la contrainte imposée à la pièce d'actionnement (5).

6. Procédé de montage selon la revendication 5, **caractérisé en ce que** l'étape de suppression consiste en un retrait manuel du moyen de retenu (7) provisoire.

7. Procédé de montage selon la revendication 5, **caractérisé en ce que** l'étape de suppression consiste en un escamotage automatique du moyen de retenu (8) provisoire par coopération de ce dernier avec la pièce d'actionnement (5) lors d'au moins une étape de tassement de la gaine (10) ou lors d'un serrage du frein.

8. Procédé de montage selon la revendication 7, **caractérisé en ce que** l'étape de suppression consiste en une rupture du moyen de retenu provisoire par coopération avec la pièce d'actionnement (5) lors d'au moins une étape de tassement de la gaine (10) ou lors d'un serrage du frein.

9. Procédé de montage selon la revendication 7 ou 8, **caractérisé en ce qu'**il comporte une étape de repositionnement automatique de la pièce d'actionnement (5), au moins au voisinage de sa position de référence, postérieure à l'étape de suppression ou de diminution de la contrainte, le repositionnement étant réalisé par un actionnement de la pièce d'actionnement (5) lors d'une étape de tassement de la gaine (10) ou lors d'un serrage du frein.

10. Procédé de montage selon l'une quelconque des revendications 1 à 9, **caractérisé en ce que** l'étape de tassement de la gaine (10) est réalisée par au moins un serrage du frein.

11. Frein, notamment pour véhicule automobile, comprenant : un support (2), au moins une mâchoire de frein (3, 4), mobile sur le support (2), destinée à coopérer avec une surface de friction, un mécanisme de transmission (5, 9) destiné à déplacer la ou les mâchoires de frein (3, 4), le mécanisme de transmission (5, 9) comportant au moins une pièce d'actionnement (5) mobile entre une position de référence dans laquelle le frein n'est pas serré et une position de travail maximale dans laquelle le frein est serré au maximum, un câble (1) gainé destiné à être fixé à l'une de ses extrémités à un dispositif de commande (12) et dont l'autre extrémité est reliée à la pièce d'actionnement (5), la gaine du câble (1) ayant une longueur originelle qui diminue lors des premières utilisations du câble, pour atteindre une longueur définitive, **caractérisé en ce qu'** il comporte au moins un moyen de retenu (7, 8) provisoire apte à coopérer temporairement avec la pièce d'actionnement (5) lors du montage du frein, de façon à maintenir la pièce d'actionnement (5) dans une position stable et décalée située entre sa position de référence et sa position de travail maximale lors des premières utilisations du câble, et **en ce que** le moyen (7, 8) de retenu est apte à ne pas coopérer avec la pièce d'actionnement (5) lorsque la gaine a sa dimension définitive et que le frein est en configuration de fonctionnement.

12. Frein selon la revendication 11, **caractérisé en ce que** la différence entre la position stable décalée et la position de référence est déterminée de façon à compenser au moins partiellement, et de préférence entièrement, la variation de longueur de la gaine du câble (1) entre ses dimensions originelles et définitives.

13. Frein selon la revendication 11 ou 12, **caractérisé en ce que** le moyen de retenu (8, 7) provisoire est solide, et fusible et/ou amovible et/ou élastique.

14. Frein selon l'une quelconque des revendications 11 à 13, **caractérisé en ce que** le moyen de retenu (7) provisoire est constitué d'un axe (14) formant butée, l'axe (14) étant disposé entre la position de référence et la position de travail maximale de la pièce d'actionnement (5).

15. Frein selon la revendication 14, **caractérisé en ce que** l'axe (14) comporte à l'une de ses extrémités un organe de préhension (13).

16. Frein selon la revendication 15, **caractérisé en ce que** le support (2) possède une première face destinée à accueillir la ou les mâchoires (3, 4) de frein et le mécanisme de transmission (5, 9), et **en ce que** l'organe de préhension (13) fait saillie sur une face (19) du support opposée à la première face.

17. Frein selon l'une quelconque des revendications 11 à 13, **caractérisé en ce que** le moyen de retenu (8) provisoire est constitué d'un doigt (16) mobile entre une première position (17) maintenant la pièce d'actionnement (5) dans la position décalée par calage, et une deuxième position (18) dans laquelle il ne coopère pas avec la pièce d'actionnement (5).

18. Frein selon la revendication 17, **caractérisé en ce que** le doigt (16) est mobile en rotation.

19. Frein selon la revendication 17 ou 18, **caractérisé en ce que** lorsque le frein est en position montée sur un véhicule, le doigt (16) est sollicité vers la deuxième position (18) par gravité.

20. Frein selon la revendication 17 ou 18, **caractérisé en ce que** lorsque le frein est en position montée sur un véhicule, le doigt (16) est sollicité vers la deuxième position (18) par un moyen de rappel coopérant avec le doigt (16) mobile.

21. Frein selon la revendication 19 ou 20, **caractérisé en ce que** le moyen d'actionnement (5) coopère avec le doigt (16) mobile de façon à ce que le déplacement du moyen d'actionnement (5) libère le doigt (16) mobile.

22. Frein selon l'une quelconque des revendications 17 à 21, **caractérisé en ce que** le moyen de retenu (8) provisoire est fixé sur la mâchoire (4) située à proximité de la pièce d'actionnement (5).

23. Frein selon l'une quelconque des revendications 11 à 22, **caractérisé en ce qu'**il est comporte deux mâchoires (3, 4).

24. Frein selon l'une quelconque des revendications 11 à 23, **caractérisé en ce que** la pièce d'actionnement (5) est un levier pivotant.

25. Frein selon l'une quelconque des revendications 11 à 24, **caractérisé en ce que** le dispositif de commande (12) est un organe de commande d'un frein secondaire.

26. Frein selon l'une quelconque des revendications 11 à 25, **caractérisé en ce que** le frein est un frein à tambour.

27. Véhicule automobile, **caractérisé en ce qu'**il comporte un frein conforme aux revendications 11 à 26.

## Claims

1. Method of mounting a motor vehicle brake, the brake comprising a support (2), at least one brake shoe (3, 4) able to move on the support (2) and intended to collaborate with a friction surface, the transmission mechanism (5, 9) intended to move the brake shoe or shoes (3, 4), the transmission mechanism (5, 9) comprising at least one actuating component (5) able to move between a reference position in which the brake is not applied and a maximum work position in which the brake is applied as firmly as possible, a sheathed cable (1) intended to be fixed at one of its ends to a control device (12) and the other end of which is connected to the actuating piece (5), the mounting method involving: a step of attaching the cable (1) to the control device (12) and to the actuating piece (5), a step of tensioning the cable (1), at least one step of knocking back the sheath (10) of the cable (1), a step of adjusting the tension in the cable (1), **characterized in that** the step of adjusting the tension in the cable (1) involves positioning the actuating piece (5) temporarily and under stress in a stable and offset position located between its reference position and the maximum work position, and **in that** the adjustment step precedes the step of tensioning the cable (1).

2. Mounting method according to Claim 1, **characterized in that** the step of adjusting the tension in the cable (1) consists in positioning the actuating piece (5) a distance of between 3 and 15 mm away from its reference position.

3. Mounting method according to Claim 1 or 2, **characterized in that** the step of adjusting the tension in the cable (1) consists in positioning the actuating piece (5) at a distance ranging between 10 and 30% of the distance separating the reference position from the maximum work position.

4. Mounting method according to any one of Claims 1 to 3, **characterized in that** the step of adjusting the tension in the cable (1) consists in forcing the actuating piece (5) into a temporary offset position by fitting a temporary retaining means (7, 8) that collaborates with the actuating piece (5), the retaining means being solid and/or meltable and/or removable and/or elastic.

5. Mounting method according to any one of Claims 1 to 4, **characterized in that** the step of tensioning the cable (1) is followed by a step of eliminating or reducing the stress imposed on the actuating piece (5).

6. Mounting method according to Claim 5, **characterized in that** the elimination step consists in manually removing the temporary retaining means (7).

7. Mounting method according to Claim 5, **characterized in that** the elimination step consists in automatically retracting the temporary retaining means (8) through collaboration between the latter and the actuating piece (5) during at least one step of knocking the sheath (10) back or during application of the brake.

8. Mounting method according to Claim 7, **characterized in that** the elimination step consists in braking the temporary retaining piece through collaboration with the actuating piece (5) during at least one step of knocking back the sheath (10) or during application of the brake.

9. Mounting method according to Claim 7 or 8, **characterized in that** it comprises a step of automatically repositioning the actuating piece (5) at least near to its reference position after the step of eliminating or reducing the stress, the repositioning being performed by actuating the actuating piece (5) during a step of knocking back the sheath (10) or during application of the brake.

10. Mounting method according to any one of Claims 1 to 9, **characterized in that** the step of knocking back the sheath (10) is achieved by at least one application of the brake.

11. Brake, particularly for a motor vehicle, comprising: a support (2), at least one brake shoe (3, 4) able to move on the support (2) and intended to collaborate with a friction surface, a transmission mechanism (5, 9) intended to move the brake shoe or shoes (3, 4), the transmission mechanism (5, 9) comprising at least one actuating piece (5) able to move between a reference position in which the brake is not applied and a maximum work position in which the brake is applied as firmly as possible, a sheathed cable (1) intended to be fixed at one of its ends to a control device (12) and of which the other end is connected to the actuating piece (5), the sheath of the cable (1) having an original length that decreases during the first few uses of the cable in order to reach a definitive length, **characterized in that** it comprises at least one temporary retaining means (7, 8) able to collaborate temporarily with the actuating piece (5) when the brake is being mounted, so as to keep the actuating piece (5) in a stable and offset position located between its reference position and its maximum working position during the first few uses of the cable, and **in that** the retaining means (7, 8) is able not to collaborate with the actuating piece (5) when the sheath has reached its definitive length and the brake is in its operating configuration.

12. Brake according to Claim 11, **characterized in that** the difference between the offset stable position and the reference position is determined in such a way as to at least partially, and preferably fully, compensate for the variation in the length of the sheath of the cable (1) between its original and definitive dimensions.

13. Brake according to Claim 11 or 12, **characterized in that** the temporary retaining means (8, 7) is solid, and meltable and/or removable and/or elastic.

14. Brake according to any one of Claims 11 t o13, **characterized in that** the temporary retaining means (7) consists of a pin (14) forming an end stop, the pin (14) being positioned between the reference position and the maximum work position of the actuating piece (5).

15. Brake according to Claim 14, **characterized in that** at one of its ends the pin (14) has a member (13) for grasping.

16. Braking according to Claim 15, **characterized in that** the support (2) has a first face intended to accept the brake shoe or shoes (3, 4) and the transmission mechanism (5, 9), and **in that** the member (13) for grasping projects from an opposite face of the support (19) to the first face.

17. Braking according to any one of Claims 11 to 13, **characterized in that** the temporary retaining means (8) consists of a finger (16) able to move between a first position (17) that keeps the actuating piece (5) in the offset position by welding, and a second position (18) in which it must not collaborate with the actuating piece (5).

18. Brake according to Claim 17, **characterized in that** the finger (16) is able to move in terms of rotation.

19. Brake according to Claim 17 or 18, **characterized in that** when the brake is in the position in which it is mounted on a vehicle, the finger (16) is urged by gravity toward the second position (18).

20. Brake according to Claim 17 or 18, **characterized in that** when the brake is in the position in which it is mounted on the vehicle, the finger (16) is urged towards the second position (18) by a return means that collaborates with the moving finger (16).

21. Brake according to Claim 19 or 20, **characterized in that** the actuating means (5) collaborates with the moving finger (16) in such a way that the movement of the actuating means (5) releases the moving finger (16).

22. Brake according to any one of Claims 17 to 21, **characterized in that** the temporary retaining means (8) is fixed to the shoe (4) situated near the actuating piece (5).

23. Brake according to any one of Claims 11 to 22, **characterized in that** it comprises two shoes (3, 4).

24. Brake according to any one of Claims 11 to 23, **characterized in that** the actuating piece (5) is a pivoting lever.

25. Brake according to any one of Claims 11 to 24, **characterized in that** the control device (12) is a member for controlling a secondary brake.

26. Brake according to any one of Claims 11 to 25, **characterized in that** the brake is a drum brake.

27. Motor vehicle, **characterized in that** it comprises a brake according to Claims 11 to 26.

## Patentansprüche

1. Verfahren zum Einbauen einer Kraftfahrzeugbremse, wobei die Bremse einen Träger (2), mindestens eine Bremsbacke (3, 4), die auf dem Träger (2) beweglich ist und dazu gedacht ist, mit einer Reibfläche zusammenzuwirken, einen Übertragungsmechanismus (5, 9), der dazu gedacht ist, die Bremsbacke(n) (3, 4) zu verschieben, wobei der Übertragungsmechanismus (5, 9) mindestens ein Betätigungsteil (5) umfasst, das zwischen einer Bezugsposition, in der die Bremse nicht angezogen ist, und einer maximalen Arbeitsposition, in der die Bremse maximal angezogen ist, beweglich ist, ein ummanteltes Kabel (1), das dazu gedacht ist, an einem seiner Enden an einer Steuervorrichtung (12) befestigt zu werden, und dessen anderes Ende mit dem Betätigungsteil (5) verbunden ist, umfasst, wobei das Einbauverfahren folgendes umfasst: einen Schritt des Einhängens des Kabels (1) an der Steuervorrichtung (12) und an dem Betätigungsteil (5), einen Schritt des Spannens des Kabels (1), mindestens einen Schritt des Zusammendrückens des Mantels (10) des Kabels (1), einen Schritt des Anpassens der Spannung des Kabels (1), **dadurch gekennzeichnet, dass** der Schritt des Anpassens der Spannung des Kabels (1) eine gespannte und provisorische Anordnung des Betätigungsteils (5) in einer stabilen und versetzten Position, die sich zwischen seiner Bezugsposition und der maximalen Arbeitsposition befindet, umfasst, und dass der Schritt des Anpassens vor dem Schritt des Spannens des Kabels (1) liegt.

2. Einbauverfahren nach Anspruch 1, **dadurch gekennzeichnet, dass** der Schritt des Anpassens der Spannung des Kabels (1) darin besteht, das Betätigungsteil (5) in einem Abstand anzuordnen, der zwischen 3 und 15 mm von seiner Bezugsposition liegt.

3. Einbauverfahren nach Anspruch 1 oder 2, **dadurch gekennzeichnet, dass** der Schritt des Anpassens der Spannung des Kabels (1) darin besteht, das Betätigungsstück (5) in einem Abstand anzuordnen, der zwischen 10 und 30 % des Abstands liegt, der die Bezugsposition von der maximalen Arbeitsposition trennt.

4. Einbauverfahren nach einem der Ansprüche 1 bis 3, **dadurch gekennzeichnet, dass** der Schritt des Anpassens der Spannung des Kabels (1) darin besteht, das Betätigungsteil (5) in einer provisorischen versetzten Position durch das Einsetzen eines provisorischen Haltemittels (7, 8), das mit dem Betätigungsteil (5) zusammenwirkt, zu spannen, wobei das Haltemittel fest und/oder schmelzbar und/oder abnehmbar und/oder elastisch ist.

5. Einbauverfahren nach einem der Ansprüche 1 bis 4, **dadurch gekennzeichnet, dass** auf den Schritt des Spannens des Kabels (1) ein Schritt des Entfernens oder des Verringerns der auf das Betätigungsteil (5) ausgeübten Spannung folgt.

6. Einbauverfahren nach Anspruch 5, **dadurch gekennzeichnet, dass** der Schritt des Entfernens in einem manuellen Abnehmen des provisorischen Haltemittels (7) besteht.

7. Einbauverfahren nach Anspruch 5, **dadurch gekennzeichnet, dass** der Schritt des Entfernens in einem automatischen Versenken des provisorischen Haltemittels (8) durch sein Zusammenwirken mit dem Betätigungsteil (5) bei mindestens einem Schritt des Zusammendrückens des Mantels (10) oder bei einem Anziehen der Bremse besteht.

8. Einbauverfahren nach Anspruch 7, **dadurch gekennzeichnet, dass** der Schritt des Entfernens in einem Zerreißen des provisorischen Haltemittels durch ein Zusammenwirken mit dem Betätigungsteil (5) bei mindestens einem Schritt des Zusammendrückens des Mantels (10) oder bei einem Anziehen der Bremse besteht.

9. Einbauverfahren nach Anspruch 7 oder 8, **dadurch gekennzeichnet, dass** es einen Schritt des automatischen Rückstellens des Betätigungsteils (5) mindestens in der Nähe seiner Bezugsposition umfasst, der auf den Schritt des Entfernens oder des Verringerns der Spannung folgt, wobei das Rückstellen durch eine Betätigung des Betätigungsteils (5) bei einem Schritt des Zusammendrückens des Mantels (10) oder bei einem Anziehen der Bremse ausgeführt wird.

10. Einbauverfahren nach einem der Ansprüche 1 bis 9, **dadurch gekennzeichnet, dass** der Schritt des Zusammendrückens des Mantels (10) mindestens durch ein Anziehen der Bremse ausgeführt wird.

11. Bremse, insbesondere für Kraftfahrzeuge, umfassend: einen Träger (2), mindestens eine Bremsbacke (3, 4), die auf dem Träger (2) beweglich ist und dazu gedacht ist, mit einer Reibfläche zusammenzuwirken, einen Übertragungsmechanismus (5, 9), der dazu gedacht ist, die Bremsbacke(n) (3, 4) zu verschieben, wobei der Übertragungsmechanismus (5, 9) mindestens ein Betätigungsteil (5) umfasst, das zwischen einer Bezugsposition, in der die Bremse nicht angezogen ist, und einer maximalen Arbeitsposition, in der die Bremse maximal angezogen ist, beweglich ist, ein ummanteltes Kabel (1), das dazu gedacht ist, an einem seiner Enden an einer Steuervorrichtung (12) befestigt zu werden, und dessen anderes Ende mit dem Betätigungsteil (5) verbunden ist, wobei der Mantel des Kabels (1) eine ursprüngliche Länge aufweist, die während der ersten Benutzungen des Kabels abnimmt, um eine endgültige Länge zu erreichen, **dadurch gekennzeichnet, dass** sie mindestens ein provisorisches Haltemittel (7, 8) umfasst, das dazu geeignet ist, zeitweise mit dem Betätigungsteils (5) beim Einbau der Bremse zusammenzuwirken, um das Betätigungsteil (5) in einer stabilen und versetzten Position zu halten, die sich zwischen seiner Bezugsposition und seiner maximalen Arbeitsposition bei den ersten Benutzungen des Kabels befindet, und dass das Haltemittel (7, 8) in der Lage ist, nicht mit dem Betätigungsteil (5) zusammenzuwirken, wenn der Mantel seine endgültige Größe aufweist und die Bremse sich in einer Betriebskonfiguration befindet.

12. Bremse nach Anspruch 11, **dadurch gekennzeichnet, dass** der Unterschied zwischen der stabilen versetzten Position und der Bezugsposition bestimmt wird, um mindestens teilweise und bevorzugt vollständig die Längenänderung des Mantels des Kabels (1) zwischen seinen ursprünglichen und endgültigen Abmessungen auszugleichen.

13. Bremse nach Anspruch 11 oder 12, **dadurch gekennzeichnet, dass** das provisorische Haltemittel (8, 7) fest und schmelzbar und/oder abnehmbar und/oder elastisch ist.

14. Bremse nach einem der Ansprüche 11 bis 13, **dadurch gekennzeichnet, dass** das provisorische Haltemittel (7) aus einer Achse (14) besteht, die einen Anschlag bildet, wobei die Achse (14) zwischen der Bezugsposition und der maximalen Arbeitsposition des Betätigungsteils (5) angeordnet ist.

15. Bremse nach Anspruch 14, **dadurch gekennzeichnet, dass** die Achse (14) an einem ihrer Enden ein Greiforgan (13) umfasst.

16. Bremse nach Anspruch 15, **dadurch gekennzeichnet, dass** der Träger (2) eine erste Seite besitzt, die dazu gedacht ist, die Bremsbacke(n) (3, 4) und den Übertragungsmechanismus (5, 9) aufzunehmen, und dass das Greiforgan (13) auf einer Seite (19) des Trägers vorspringt, die der ersten Seite gegenüberliegt.

17. Bremse nach einem der Ansprüche 11 bis 13, **dadurch gekennzeichnet, dass** das provisorische Haltemittel (8) aus einem Finger (16) besteht, der zwischen einer ersten Position (17), die das Betätigungsteil (5) durch Versetzen in der versetzten Position hält, und einer zweiten Position (18), in der es nicht mit dem Betätigungsteil (5) zusammenwirkt, beweglich ist.

18. Bremse nach Anspruch 17, **dadurch gekennzeichnet, dass** der Finger (16) drehbar beweglich ist.

19. Bremse nach Anspruch 17 oder 18, **dadurch gekennzeichnet, dass** wenn die Bremse auf einem Fahrzeug an der richtigen Stelle eingebaut ist, der Finger (16) durch die Schwerkraft zur zweiten Position (18) hin belastet wird.

20. Bremse nach Anspruch 17 oder 18, **dadurch gekennzeichnet, dass** wenn die Bremse auf einem Fahrzeug an der richtigen Stelle eingebaut ist, der Finger (16) durch ein Rückholmittel, das mit dem beweglichen Finger (16) zusammenwirkt, zur zweiten Position (18) hin belastet wird.

21. Bremse nach Anspruch 19 oder 20, **dadurch gekennzeichnet, dass** das Betätigungsmittel (5) mit dem beweglichen Finger (16) zusammenwirkt, so dass die Bewegung des Betätigungsmittels (5) den beweglichen Finger (16) freigibt.

22. Bremse nach einem der Ansprüche 17 bis 21, **dadurch gekennzeichnet, dass** das provisorische Haltemittel (8) an der Backe (4) befestigt ist, die sich in der Nähe des Betätigungsteils (5) befindet.

23. Bremse nach einem der Ansprüche 11 bis 22, **dadurch gekennzeichnet, dass** sie zwei Backen (3, 4) umfasst.

24. Bremse nach einem der Ansprüche 11 bis 23, **dadurch gekennzeichnet, dass** das Betätigungsteil (5) ein Schwenkhebel ist.

25. Bremse nach einem der Ansprüche 11 bis 24, **dadurch gekennzeichnet, dass** die Steuervorrichtung (12) ein Steuerorgan einer Nebenbremse ist.

26. Bremse nach einem der Ansprüche 11 bis 25, **dadurch gekennzeichnet, dass** die Bremse eine Trommelbremse ist.

27. Kraftfahrzeug, **dadurch gekennzeichnet, dass** es eine Bremse gemäß den Ansprüchen 11 bis 26 umfasst.
